# EUROPEAN PATENT APPLICATION

(11) **EP 1 074 901 A2**
(43) Date of publication of application: **07.02.2001**
(21) Application number: 00116652.9
(22) Date of filing: 02.08.2000
(51) Int. Cl.: G05B 19/042

(54) **Programmable and computerised unit system for centralised management of command and actuation devices in electrical plants**

(30) Priority: 03.08.1999 IT MI991733
(71) Applicant: Ancona, Lorenzo, 20100 Milan (IT); Ancona, Cristiano, 20100 Milan (IT)
(72) Inventor: Ancona, Lorenzo, 20100 Milan (IT); Ancona, Cristiano, 20100 Milan (IT)
(74) Representative: Coloberti, Luigi

(57) **Abstract**

A system for the centralised management of a plurality of command devices (pushbuttons/switches) (C) and actuation devices (relays) (AT) in an electrical plant. The system comprises a plurality of computerised units (10, 11) which are programmable, both locally and remotely, for the management of an unlimited number of command devices (C), each of which can be addressed to a plurality of actuation devices (AT) consisting of relays each having six functional variants. Each computerised unit (10, 11) comprises at least one dual microprocessor (MP1, MP2) which manages function inputs/outputs (I/O) which can be connected to respective command and/or actuation devices (C, AT) which can be positioned far away; the computerised units (10, 11) of the system are self-powered and may be connected together in parallel, for data exchange, by means of a bus line comprising two wires (D, -), one of which (-) is connected to earth.

## Description

### FIELD OF THE INVENTION

The present invention relates to a centralised control system for the management of a plurality of command devices (pushbuttons/switches) and actuation devices (relays) in an electrical plant, of the type defined in the claim 1, comprising one or more computerised units which can be connected together in order to exchange data by means of a bus line. The various units are provided with microprocessors programmable and reprogrammable both locally and remotely, for performing command functions and actuation functions, and each of them can be selectively connected to a respective command and/or actuation device such as a pushbutton, a switch and/or a relay with several functional variants so as to ensure a high degree of flexibility and versatility as regards installation and use of the same system.

The use of evolved (intelligent) systems intended for the management of electrical plants, which are characterised by an operating line (230 V) for supplying power to the various users and/or apparatus, in combination with bus lines for data exchange, is becoming increasingly widespread in modern plant engineering technology since it ensures a greater degree of flexibility and improved performance compared to a conventional plant.

EP-A-0 962 979 of the same Applicants, also discloses a computerised monolithic circuit which is programmable with command or actuation functions for transmitting or receiving data via a multiple-wire bus line.

An example of an evolved (intelligent) electrical plant which uses computerised monolithic circuits according to the abovementioned EP-A-0 962 979 is shown in Fig. 1 of the accompanying drawings.

As shown in this figure, the system comprises one or more computerised monolithic circuits TX, RX (encoders) programmed for command functions, for example the two circuits indicated by TX1 and TX2, and one or more computerised monolithic circuits RX (decoders) programmed for actuation functions, for example the two circuits indicated by RX1 and RX2.

All the circuits TX1 and TX2 programmed with command functions, as well as all the circuits RX1 and RX2 programmed with actuation functions, by means of a suitable interfaces I1-I4, have the data inputs/outputs I/O connected in parallel by means of a multiple-wire bus consisting, for example, of a conductor D for the transmission of data in digital form, a conductor (+) connected to an electrical power source PS for supplying the various boards at a very low voltage, and a conductor G for supplying the negative pole or earth of the system.

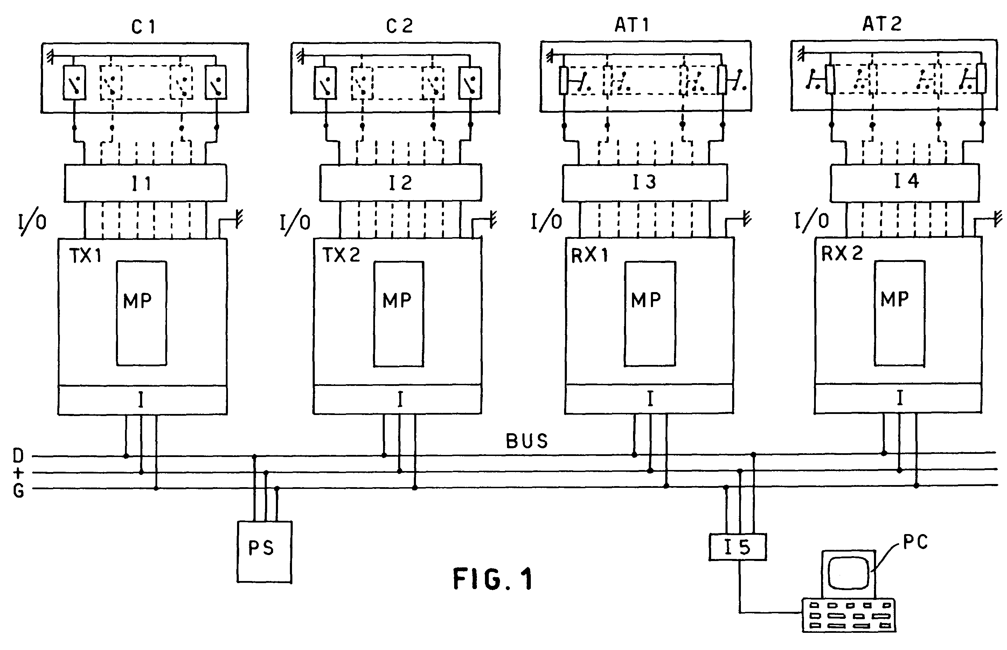

As can be seen from the same example shown in Fig. 1, each computerised monolithic circuit comprises a processing unit MP suitably programmable with data relating to the various addresses and/or various functions, both locally and remotely by means of the keyboard of a personal computer PC connected to the bus via an interface I5.

The microprocessors MP of the various computerised monolithic circuits TX1, TX2, and RX1, RX2 are supplied by the bus via a single, very low voltage source PS and also comprise a data input and data output which are conjointly connected to the conductor D of the bus.

The microprocessors MP also have a plurality of function inputs/outputs I/O which, via the interfaces I1, I2 for the encoders TX1 and TX2 and I3, I4 for the decoders RX1 and RX2, are connected respectively to corresponding command devices C1, C2, consisting for example of simple switches or pushbuttons, and to corresponding actuation devices AT1, AT2, consisting for example of relays associated with respective user appliances or apparatus to be connected to a normal electrical network.

Although plants of this kind have a good degree of flexibility and high performance, they still require fairly complex installation architecture.

### OBJECTS OF THE INVENTION

The main object of the present invention is to provide a programmable and reprogrammable centralised system for the computerised management of command and actuation devices in electrical plants of any type, by means of which it is possible to simplify further the installation procedures, thereby reducing the time and costs required for construction of said plant.

A further object of the invention is to provide a computerised system of the abovementioned kind, able to provide a greater degree of flexibility, improved performance and greater safety.

### BRIEF DESCRIPTION OF THE INVENTION

The above may be achieved by means of a centralised system for the management of a plurality of command and actuation devices, according to the claim 1.

More particularly, according to the invention a system is provided for the centralised management of a plurality of command devices and a plurality of actuation devices in an electrical plant, using computerised units each provided with at least two microprocessors which are programmable and reprogrammable, both locally and remotely, with functions which can be selectively attributed to various command/actuation devices, in which each computerised unit is supplied by its own power source and in which the data inputs and outputs of the various computerised units are connected together, for data exchange, by a bus line comprising only two wires, one of which is connected to earth.

### BRIEF DESCRIPTION OF THE DRAWINGS

These and further features of the system for the centralised management of command and actuation devices in electrical plants, according to the present invention, will emerge more clearly from the description which follows with reference to the accompanying drawings, in which:
Fig. 1 shows the diagram of a previously known system;
Fig. 2 shows the diagram for construction of a centralised management system according to the invention, relating to a computerised unit of "simple" type comprising two microprocessors, one having an encoder function and the other one a decoder function, which are structurally associated and assembled on a single board;
Fig. 3 shows a solution relating to a computerised unit of "modular" type where various microprocessors with encoder and decoder functions, which are functionally and structurally associated, are individually mounted on boards which can be plugged together.

### DETAILED DESCRIPTION OF THE INVENTION

As mentioned above, a system of the conventional type for the management of command and actuation devices in electrical plants, which uses for example a programmable monolithic circuit in accordance with the prior EP-A-0 962 979, envisages the use of several encoders TX1 and TX2 and several decoders RX1 and RX2 which are programmed so as to selectively perform the various functions of the command devices C1, C2 and the actuators AT1, AT2, respectively.

In said Figure 1 it can be noted that the various computerised monolithic circuits TX1 and TX2, RX1 and RX2 are connected, via an interface, to a triple-conductor bus extending along the whole length of the plant to be constructed.

The individual computerised monolithic circuits TX1, TX2 and RX1, RX2 are also provided as separate and distinct parts of the common power supplier PS.

It is therefore obvious that a system of the type shown in Fig. 1, although it takes advantage of the fact of separating the power line, which supplies the various users for example at a voltage of 230 volts, and the bus line operating at a very low voltage (about 15 volts), which conveys the data between the various command and actuation devices, nevertheless is still fairly complex from an installation point of view owing to the large number of computerised monolithic command/actuation circuits which are distributed along the bus.

The aim of the present invention is to improve further these known systems by simplifying them as regards installation and wiring of the individual components.

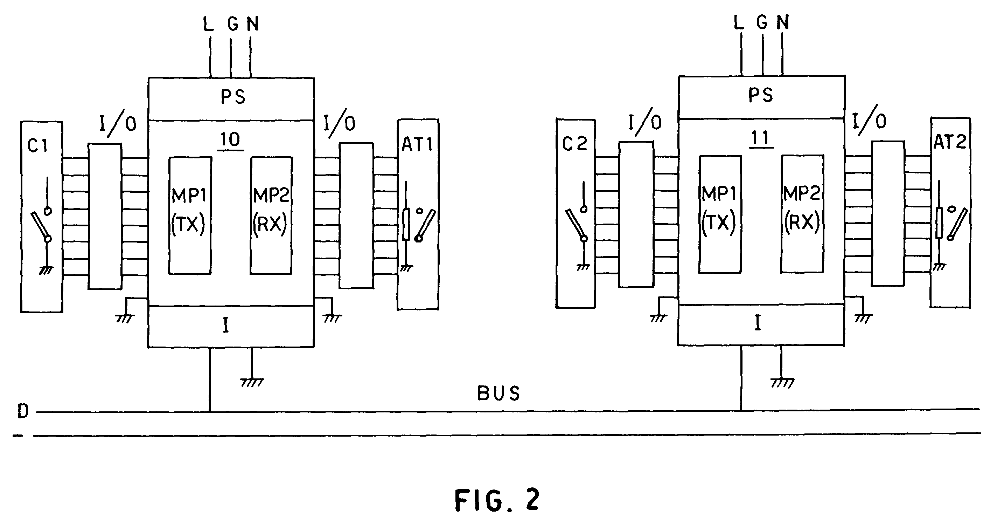

According to a first embodiment, shown in Fig. 2, the centralised management system comprises a certain number of computerised units of "simple" type, which are two in number in the example shown, and each of which comprises a dual processing unit MP1 and MP2 which may be programmed and reprogrammed both locally and remotely so as to perform command functions (TX) and actuation functions (RX), as explained further below.

Each board with a dual microprocessor associated with the respective electrical power supplier PS forms a structurally, functionally integrated and computerised unit of "simple" type.

According to another aspect of the invention, the data input/output of the two microprocessors MP1, MP2 of each computerised unit is connected in parallel to the data inputs/outputs of the microprocessors mounted on the other computerised units, by means of a bus consisting of a single data conductor D an and earth conductor (-).

More precisely, the system according to Figure 2 comprises two "simple" units 10 and 11 which are connected together in parallel. Each "simple" unit 10, 11 comprises a first microprocessor MP1 programmable and reprogrammable both locally and remotely, for example with eight command functions, the function inputs/outputs I/O of which are connected, via a suitable interface, to respective command devices such as pushbuttons and/or switches which are schematically represented by the blocks C1 and C2 as shown in Figure 1.

Each "simple" unit 10, 11 also comprises a second microprocessor MP2 again programmable and reprogrammable both locally and remotely, for example with eight actuation functions, the inputs/outputs I/O of which are in turn connected, again by means of a suitable interface, to respective actuation devices which are schematically represented by the blocks AT1 and AT2 and consist of relays each having six functional variants such as: monostable, step-by-step, set/reset, timer, switch and inverter.

Each unit is also in the form of a structurally and functionally integrated board with its own 230-volt power supplier PS and with its own interface I for exchanging data along the conductor D of the dual-wire line bus connecting in parallel the various units 10, 11 for managing the functions of the various command and actuation devices as shown.

Since the two microprocessors MP1 and MP2, the respective power supplier PS and the interface I form a "simple" computerised unit in the form of a structurally and functionally integrated board with standardised dimensions, said unit may be housed in a normal multi-modular embedded box, connecting it simply to the conductor D of the data exchange bus as well as to the power line (230 volts) LGN by means of respective terminals.

In this way it is possible to achieve a substantial simplification of the plant and a consequent reduction in the installation time and costs.

In fact, after the bus line and the 230-volt power supply line have been laid down, it is merely required to choose the most suitable position for installing the boxes intended to house the various "simple" computerised units.

As mentioned above, in the example according to the Figure 2, each board together with the associated microprocessors MP and its power source PS forms a ^{"}simple" electronic unit which may be programmed and the reprogrammed with command and actuation functions and can be connected in parallel to other "simple" electronic units in a plant, by means of a single data wire and an earth wire.

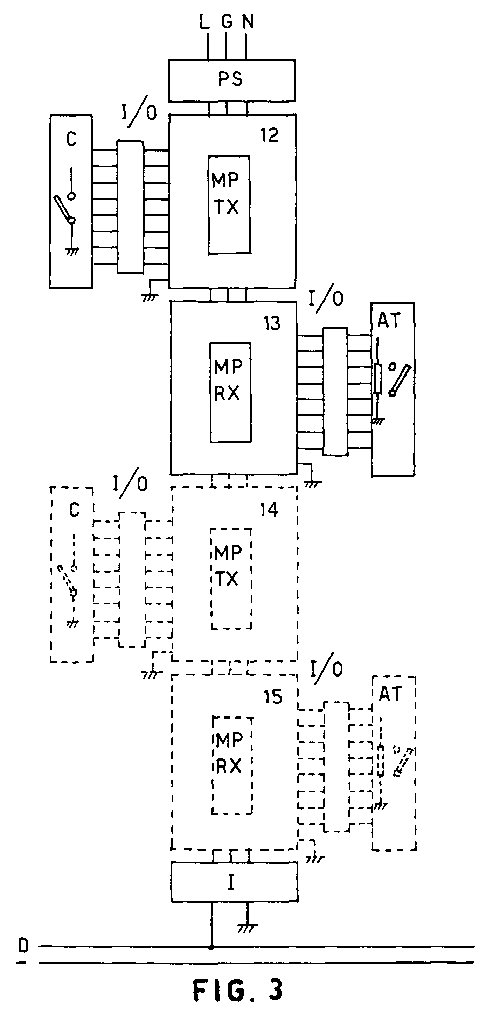

Another possible solution is shown in Fig. 3 of the accompanying drawings which, similar to the example according to Fig. 2, again shows a computerised unit, but of the "modular" type, comprising two or more boards which can be plugged together, each having a command or actuation function, and functionally and structurally integrated.

More precisely, Fig. 3 shows a computerised unit of the "modular" type, comprising a certain number of computerised boards 12-15 which can be plugged together by means of connectors and each of which comprises its own processing unit MP which may be programmed and reprogrammed, both locally and remotely, so as to perform command functions (TX) or actuation functions (RX).

In a similar manner to the previous example, the function inputs I/O of the microprocessor MP of each board 12-15 are connected to a group of command devices C or actuation devices AT, respectively, while the data inputs/outputs are again connected to the data wire D of the data bus by means of a common interface I; a single power supplier PS with a suitable capacity again supplies power to the various boards of the "modular" unit.

The "modular" computerised unit may be equipped with a plurality of computerised boards having, for example, eight command circuits (TX), and with a plurality of computerised boards having, for example, eight actuation circuits (RX), resulting in an overall total of "n" command functions and up to "n" actuation functions.

Within the scope of the present invention, however, other solutions a possible: for example, by using or combining one or more "simple" computerised units of the type shown in Figure 2, with one or more "modular" computerised units of the type shown in Figure 3, it is possible to construct "composite" plants where all the command devices (pushbuttons or switches) and actuation devices (relays) may be installed, also individually, at distances of more than 200 metres from the computerised unit by means of wires of telephone type connected to a common earth.

The advantages of the centralised system for managing command and actuation devices according to the invention, as mentioned initially, are numerous compared to plants of the conventional type and compared to previously known computerised management systems.

In fact, the installation and wiring of the various computerised units, both of the "simple" and "modular" type, is drastically simplified owing to the small number of connection points which are required, while maintaining a high degree of flexibility and functionality of the system. In fact, all the computerised units, in addition to being connected to the 230-volt operating line, are also interconnected by means of two wires, one of which is connected to earth.

The architecture of the system allows plants to be constructed with a large number of control points and actuating points which nevertheless may be managed in the same zone and/or in several zones of the same plant, even though arranged in separate areas.

The remote positioning of command devices (pushbuttons or switches) and actuation devices (relays), the management of which is centralised in one or more "simple" or "modular" computerised units, allows the construction of electrical plants with a very high intrinsic safety factor since they operate at a very low voltage (SELV - security electrical low voltage) owing to the fact that the actuation devices (relays) may also be installed directly into the user appliances.

The positioning of the relays in the immediate vicinity of, or directly within the user appliances totally eliminates the control wires operating at a voltage of 230 volts, otherwise needed if the command devices were provided, as in the conventional systems, with pushbuttons/switches, or with relays mounted on actuation boards as in the bus systems.

The invention therefore consists of a solution which bestows on any plant not only a high degree of safety, totally eliminating the risk of short-circuits and fires in both the command and the actuation devices, but also an innovative installation technology.

From the above description and illustrations in the accompanying drawings it will therefore be understood that the invention provides a new system for the centralised management of command and actuation devices in electrical plants, using "simple" and/or "modular" computerised units selectively programmable and reprogrammable as regards both addressing thereof and the various command and/or actuation functions and able to achieve the objects mentioned.

It is understood, however, that the description and illustrations with reference to the accompanying drawings have been provided purely by way of a non-limiting example of the general features of the invention.

## Claims

1. System for the centralised management of a plurality of command devices (C) and a plurality of actuation devices (AT) in electrical plants, using computerised units (10, 11) each provided with a microprocessor (MP) programmable and reprogrammable with command or actuation functions, in which the function inputs/outputs (I/O) of each microprocessor (MP) are connected to said plurality of command and actuation devices (C, AT), characterised in that each computerised unit (10, 11) comprises at least a first microprocessor (MP) programmed with command functions, at least a second microprocessor (MP) programmed with actuation functions, and in that the data inputs and outputs (I/O) of the various computerised units (10, 11) for managing the command and actuation devices (C, AT) are connected together in parallel, for data exchange, by means of a two wire bus line comprising a data line (D) and an earth line (-).

2. System according to Claim 1, characterised in that each computerised unit (10, 11) comprises a single power supplier (PS) which is common to the microprocessors (MP) of the same unit (10, 11).

3. System according to Claim 2, characterised in that the microprocessors (MP) and the common power supplier (PS) of each computerised unit (10, 11) define, as a whole, a structurally and functionally integrated unit.

4. System according to Claim 1, characterised in that each computerised unit (10, 11) is in the form of "simple" type comprising a first microprocessor (MP) programmed with command functions and a second microprocessor (MP) programmed with actuation functions, the function inputs/outputs of the microprocessors (MP) being selectively connectable to command and actuation devices (C, AT) by respective interfaces (I).

5. System according to Claim 1, characterised by comprising a plurality of computerised units (12, 14) each comprising a microprocessor (MP) programmed with command functions and a plurality of computerised units (13, 15) each comprising a microprocessor (MP) programmed with actuator functions, and a single power supply (PS) common to all computerised units (10-15), said computerised units (10-15) and power supply (PS) being in the form of a structurally and functionally integrated unit.

6. System according to claim 1 or 5, characterised in that each actuation device (AT) is located in the vicinity of a user appliance or incorporated in the user appliance itself.
